# EUROPEAN PATENT APPLICATION

(11) **EP 1 981 197 A1**
(43) Date of publication of application: **15.10.2008**
(21) Application number: 06712667.2
(22) Date of filing: 31.01.2006
(51) Int. Cl.: H04J 15/00

(54) **RADIO TRANSMISSION DEVICE, RADIO RECEPTION DEVICE, AND RADIO COMMUNICATION SYSTEM**

(71) Applicant: MITSUBISHI ELECTRIC CORPORATION, Chiyoda-ku Tokyo 100-8310 (JP)
(72) Inventor: MOTOYOSHI, Katsuyukic/o Mitsubishi Denki K., Tokyo;1008310 (JP)
(74) Representative: Zech, Stefan Markus
(86) International application number: PCT/JP2006/301524
(87) International publication number: WO 2007/088579

(57) **Abstract**

A radio communication system according to the present invention employs a hybrid ARQ (Automatic Repeat Request) and transmits and receives radio packets using a plurality of streams. The radio communication system includes a transmitter (10) and a receiver (13). The transmitter (10) includes a packet generating unit that generates a plurality of transmission packets from single transmission data and arranges the transmission packets in a space direction such that the transmission packets can be simultaneously transmitted; and a transmitting unit that separately carries out predetermined transmission processing on each of the transmission packets arranged in the space direction and simultaneously transmits the transmission packets using streams corresponding to the transmission packets. The receiver (13) includes a decoding unit that decodes original transmission data from a received packet; and a retransmission control unit that sets, in processing for generating an ACK signal and a NACK signal based on a result of the decoding and returning the ACK signal and the NACK signal to a transmitter, an error detection threshold indicative of a number of times of error detection for each of the transmission data and returns the NACK signal when number of errors detected by the decoding unit exceeds the error detection threshold.

## Description

### TECHNICAL FIELD

The present invention relates to a MIMO radio communication system, and, more particularly to a MIMO radio communication system that adopts hybrid ARQ (Automatic Repeat Request).

### BACKGROUND ART

In the conventional MIMO radio transmitting apparatus, an antenna for allocating transmission data is switched at the time of the last transmission and at the time of retransmission of radio packets generated from the transmission data. As a result, radio packets are transmitted to a reception side through different propagation paths at the time of the last transmission and at the time of retransmission. Therefore, compared with a radio transmitting apparatus in which radio packets are transmitted from same antenna, in the MIMO radio transmitting apparatus, a probability that a transmission quality of specific transmission data continuously drops when a quality of a specific propagation path is low can be reduced, an overall error rate characteristic can be improved, and a substantial transmission data amount can be increased (see, for example, Patent Document 1).

Patent Document 1: Japanese Patent Laid-open No. 2004-72427 Fig. 1

### DISCLOSURE OF INVENTION

### PROBLEM TO BE SOLVED BY THE INVENTION

However, in the conventional MIMO radio transmitting apparatus, there are problems in that it is difficult to eliminate a control delay generated due to retransmission, and a drop in the throughput of transmission data occurs due to the control delay.

A space interleave effect realized by using different propagation paths can be obtained only when retransmission is performed, i.e., the space interleave effect is not always obtained. Therefore, there is a problem in that an error rate characteristic is low when fluctuation in a propagation path is sharp or when there is a difference in a propagation path quality of each antenna.

The present invention has been devised in view of the above and it is an object of the present invention to provide a MIMO radio communication system that can realize both elimination of a control delay due to retransmission and improvement of transmission throughput through more effective utilization of space and time interleave effects.

### MEANS FOR SOLVING PROBLEM

To solve the above problems and to achieve the above objects, a radio communication system according to the present invention employs a hybrid ARQ (Automatic Repeat Request) and transmits and receives radio packets using a plurality of streams. The radio communication system includes a transmitter and a receiver. The transmitter includes a packet generating unit that generates a plurality of transmission packets from single transmission data and arranges the transmission packets in a space direction such that the transmission packets can be simultaneously transmitted; and a transmitting unit that separately carries out predetermined transmission processing on each of the transmission packets arranged in the space direction and simultaneously transmits the transmission packets using streams corresponding to the transmission packets. The receiver includes a decoding unit that decodes original transmission data from a received packet; and a retransmission control unit that sets, in processing for generating an ACK signal and a NACK signal based on a result of the decoding and returning the ACK signal and the NACK signal to a transmitter, an error detection threshold indicative of a number of times of error detection for each of the transmission data and returns the NACK signal when number of errors detected by the decoding unit exceeds the error detection threshold.

### EFFECT OF THE INVENTION

According to the present invention, it is possible to realize improvement of a transmission characteristic through an interleave effect in a space direction and elimination of a control delay through a reduction in a feedback information amount.

### BRIEF DESCRIPTION OF DRAWINGS

[Fig. 1] Fig. 1 is a diagram of an example of the structure of a transmitter according to a first embodiment of the present invention.
[Fig. 2] Fig. 2 is a diagram of an example of a configuration of a MIMO radio communication system.
[Fig. 3] Fig. 3 is a schematic diagram of a plurality of streams formed by transmission antennas, a MIMO propagation path, and reception antennas shown in Fig. 2.
[Fig. 4] Fig. 4 is a diagram of an example of the internal structure of a packet generating unit.
[Fig. 5] Fig. 5 is a diagram of a method of arranging radio packets when "Chase combining" is adopted as a hybrid ARQ system.
[Fig. 6] Fig. 6 is a diagram of a method of arranging radio packets in a different manner from that shown in Fig. 5.
[Fig. 7] Fig. 7 is a diagram of an example of the structure of a transmitter according to a second embodiment of the present invention.
[Fig. 8] Fig. 8 is a diagram of an example of control in the second embodiment.
[Fig. 9] Fig. 9 is a diagram of an example of control in the second embodiment.
[Fig. 10] Fig. 10 is a diagram of a method of arranging radio packets in a third embodiment of the present invention.
[Fig. 11] Fig. 11 is a diagram of a method of arranging radio packets in a fourth embodiment of the present invention.
[Fig. 12] Fig. 12 is a diagram of an example of the structure of a transmitter according to a fifth embodiment of the present invention.
[Fig. 13] Fig. 13 is a diagram of an example of the structure of a receiver according to the present invention.

### EXPLANATIONS OF LETTERS OR NUMERALS

1 data generating unit
2 packet generating unit
3-1 to 3-4 modulating units
4-1 to 4-4, 65-1 to 65-4 RF units
5-1 to 5-4 transmission antennas
7 retransmission detecting unit
9, 69 control units
10 transmitter
12-1 to 12-4 reception antennas
13 receiver
15 encoder
16, 18-1 to 18-4, 67 buffers
17, 34 selectors
64 transmission-weight multiplying unit
66 demodulating unit
68-1 to 68-4 decoding units

### BEST MODE(S) FOR CARRYING OUT THE INVENTION

Exemplary embodiments of a radio communication system according to the present invention are explained in detail below based on the drawings. The present invention is not limited by the embodiments.

### First Embodiment.

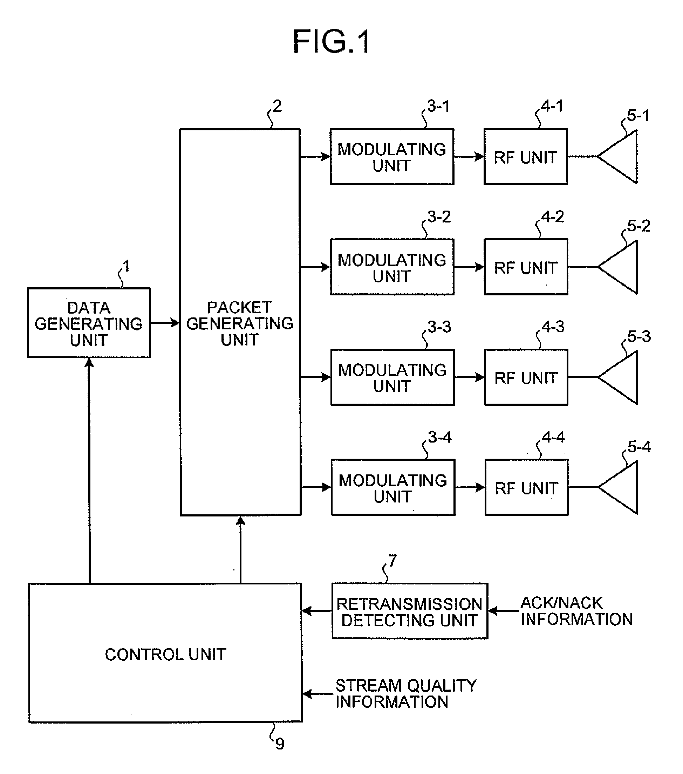

Fig. 1 is a diagram of an example of the structure of a radio transmitting apparatus (hereinafter, "transmitter") according to a first embodiment of the present invention. The transmitter includes a data generating unit 1, a packet generating unit 2, modulating units 3-1 to 3-4, RF units 4-1 to 4-4, transmission antennas 5-1 to 5-4, a retransmission detecting unit 7, and a control unit 9. For convenience of explanation only four transmission antennas are shown in Fig. 1; however, the present invention does not limit the number of transmission antennas.

Operations of the transmitter are explained next. The data generating unit 1 generates transmission data under the control of the control unit 9. The packet generating unit 2 generates radio packets from the transmission data, which is received from the data generating unit 1, again under the control of the control unit 9. The number of packets generated is equal to the number of streams on which the radio packets are to be transmitted in parallel. The radio packets are generated based on a hybrid ARQ (Automatic Repeat Request). As a hybrid ARQ system, for example, "Chase combining" or "IR (Incremental Redundancy)" is used. Consequently, on a reception side, because a plurality of radio packets generated from the same transmission data are combined and decoded, an error rate of the packets can be improved.

The modulating units 3-1 to 3-4 modulate and output the respective radio packets output from the packet generating unit 2. The RF units 4-1 to 4-4 apply predetermined transmission processing, such as frequency conversion, amplification, and filtering, to modulated signals output from the modulating units 3-1 to 3-4 to convert the modulated signals into transmission signals and output the transmission signals. The antennas 5-1 to 5-4 radiate the outputs of the RF units 4-1 to 4-4 as radio waves.

In Fig. 1, ACK/NACK information is information concerning responses (ACK and NACK) in radio packet units fed back from the reception side in response to the transmitted respective radio packets. The retransmission detecting unit 7 detects retransmission of the respective radio packets using this ACK/NACK information.

In Fig. 1, stream quality information is information representing qualities of the streams on which the radio packets are transmitted. As the qualities, for example, signal-to-interference noise power ratios of the respective streams and gains (singular values obtained by singular-value-decomposing a MIMO transmission path matrix) for each of peculiar beams corresponding to the streams in the case of a MIMO transmission system employing the peculiar beams are used. It is also possible to use an allocation request (in which a request for a stream in use is described) from a receiving apparatus corresponding to the transmitter. In this case, the allocation request can be given priority over a packet allocation policy that a base station determines from the qualities of the streams or a final stream use policy can be determined by comprehensively evaluating the allocation request and actual qualities of the streams. As a method of generating an allocation request in the receiving apparatus, for example, an allocation request is generated by calculating the number of usable streams and qualities of the respective streams from a MIMO channel matrix estimated by the receiving apparatus and judging the number of necessary streams from a result of the calculation. As the qualities, these indexes can also be used in combination.

The control unit 9 controls data generation and radio packet generation using the output of the retransmission detecting unit 7 and the stream quality information. Specifically, unlike in the conventional technique, radio packets are generated to make it possible to simultaneously transmit an initial transmission packet and a retransmission packet at the same time and on different streams. In the normal hybrid ARQ, a plurality of radio packets generated from identical transmission data are arranged only in a time direction. However, in this embodiment, the radio packets are arranged in a space direction as well and transmitted simultaneously. Criteria for arranging the radio packets in the time and space directions are determined from the number of times of retransmission of the transmission data, a quality of the streams, and the like.

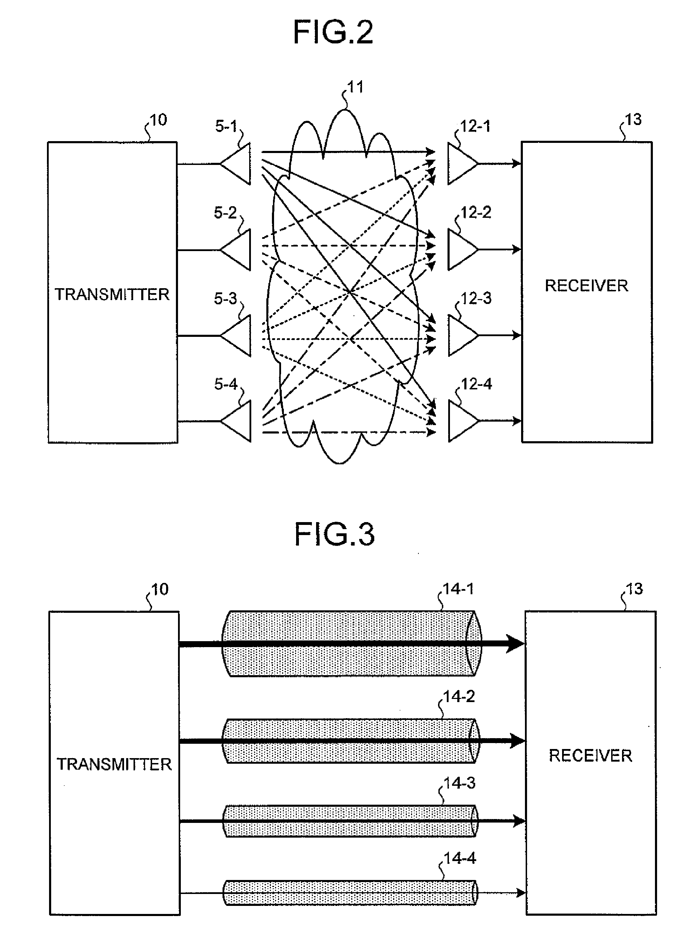

Details of the method of arranging radio packets are explained with reference to Figs. 2, 3, 4, and 5. Fig. 2 is a diagram of an example of a configuration of a MIMO radio communication system according to this embodiment. The MIMO radio communication system includes a transmitter 10 including the transmission antennas 5-1 to 5-4, a MIMO propagation path 11, and a receiver 13 including the reception antennas 12-1 to 12-4. The transmitter 10 transmits a plurality of transmission data in parallel through the transmission antennas 5-1 to 5-4. The transmission data reach the reception antennas 12-1 to 12-4 through the MIMO propagation path 11 having a plurality of inputs and outputs. In the receiver 13, the respective transmission data are separated, demodulated, and decoded. For convenience of explanation only four transmission antennas and four reception antennas are shown in Fig. 2; however, in the present invention, the number of transmission antennas and the number of reception antennas are not limited.

Fig. 3 is a schematic diagram of a plurality of streams formed by the transmission antennas 5-1 to 5-4, the MIMO propagation path 11, and the reception antennas 12-1 to 12-4 shown in Fig. 2. In Fig. 3, qualities of streams 14-1 to 14-4 are indicated by diameters of columns. Larger diameters of the columns indicate that the qualities are higher and there is room for transmitting more data. In Fig. 3, the stream 14-1 has a highest quality and the qualities fall in order of the streams 14-2, 14-3, and 14-4.

The radio packets generated by the packet generating unit 2 of the transmitter 10 are arranged on the streams 14-1 to 14-4. When arranging the packets, according to qualities of the streams 14-1 to 14-4, a plurality of radio packets corresponding to specific transmission data, for example, radio packets equivalent to an initial transmission packet and a retransmission packet in the first time are arranged on a plurality of streams (in the example shown in Fig. 3, the stream 14-3 and the stream 14-4) and simultaneously transmitted. If a radio packet is transmitted on any of the low-quality streams 14-3 and 14-4, there is a high probability that an error is detected in that radio packet at the receiver 13. Therefore, right from the beginning, the initial transmission packet and the retransmission packet are separately allocated to the streams 14-3 and 14-4 and simultaneously transmitted. On the reception side, the two radio packets are combined and decoded based on the hybrid ARQ system. Consequently, the error rate characteristic can be improved, control delay due to retransmission caused in the past is eliminated, and, as a result, throughput is improved. Judgment on the qualities (satisfactory or inferior) is performed by using the stream quality information. For example, the qualities are judged according to whether the qualities satisfy a predetermined reference value (a stream quality standard) of the stream quality information.

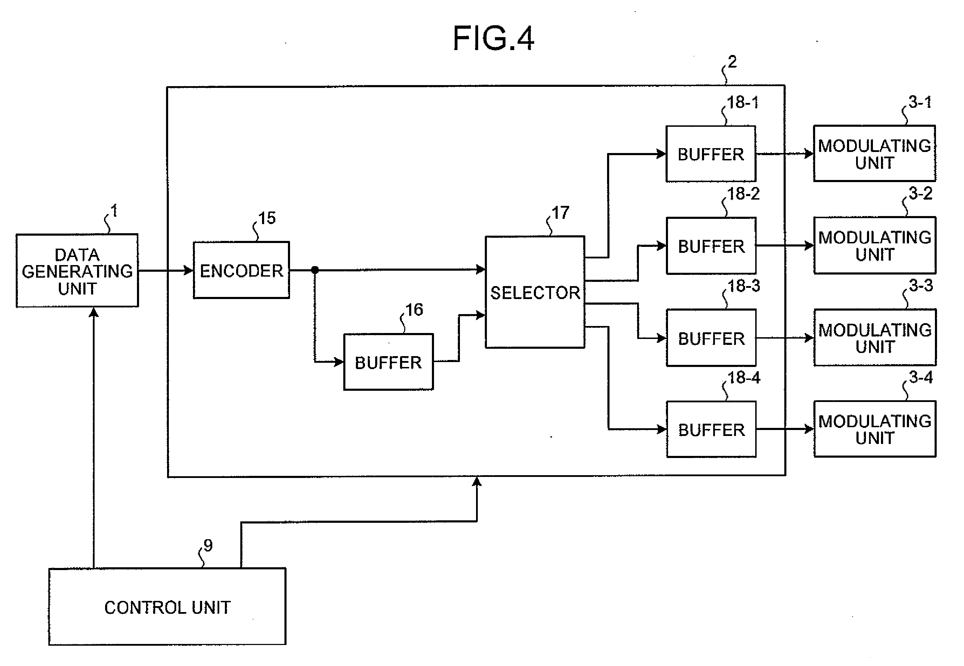

Fig. 4 is a diagram of an example of the internal structure of the packet generating unit 2. The packet generating unit 2 includes an encoder 15, a buffer 16, a selector 17, and buffers 18-1 to 18-4. In the packet generating unit 2, the selector 17 and the buffers 18-1 to 18-4 control the arrangement in a time direction and a stream direction of radio packets under the control of the control unit 9. Otherwise, the packet generating unit 2 operates in the same manner as the packet generating unit of the hybrid ARQ that performs only retransmission in the normal time direction.

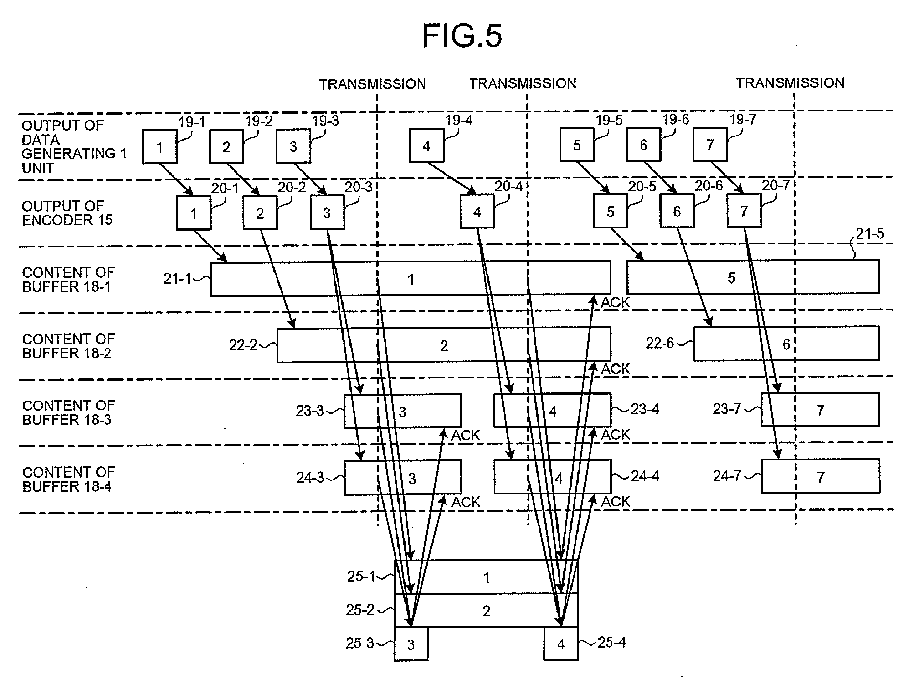

Fig. 5 is a diagram for explaining a method of arranging radio packets when "Chase combining" is adopted as the hybrid ARQ system. In Fig. 5, an example in which radio packets (two radio packets for initial transmission and retransmission) generated from identical transmission data are allocated to the streams 14-3 and 14-4 among the streams 14-1 to 14-4 is shown. This arrangement changes according to a state of a MIMO channel, the number of times of retransmission, and the like and is not fixed to the arrangement shown in Fig. 5.

In Fig. 5, 19-1 to 19-7 represent output signals (transmission data) output from the data generating unit 1; 20-1 to 20-7 represent signals (encoded data) output from the encoder 15; 21-1 and 21-5 represent contents of the buffer 18-1; 22-2 and 22-6 represent contents of the buffer 18-2; 23-3, 23-4, and 23-7 represent contents of the buffer 18-3; 24-3, 24-4, and 24-7 represent contents of the buffer 18-4; and 25-1 to 25-4 represent received data.

For example, in Fig. 5, first, the signal 19-1 is output from the data generating unit 1. Incidentally, the signal 19-1 becomes the transmission data. This transmission data 19-1 is encoded by the encoder 15 and output to the buffer 18-1 as the encoded data 20-1. Similarly, the transmission data 19-2 output by the data generating unit 1 becomes the encoded data 20-2 and it is input to the buffer 18-2. The transmission data 19-3 output by the data generating unit 1 becomes the encoded data 20-3 and is input to the buffer 18-3 and the buffer 18-4. After the data are stored in the buffers 18-1 to 18-4, the contents of the respective buffers are sent to the modulating units 3-1 to 3-4. In the modulating units 3-1 to 3-4, modulation and RF processing are carried out on the contents. A transmission signal generated by predetermined transmission processing is transmitted as a transmitter output.

The receiver receives radio packets transmitted through the streams 14-1 and 14-4. The received data 25-1 corresponds to the content 21-1 of the buffer 18-1 and the received data 25-2 corresponds to the content 22-2 of the buffer 18-2. The received data 25-3 corresponds to the content 23-2 of the buffer 18-3 and the content 24-3 of the buffer 18-4 and is obtained by combining these two radio packets.

Thereafter, the receiver generates an ACK signal and a NACK signal from a result of error detection of the received data and returns the ACK signal and the NACK signal to the transmitter. In the example shown in Fig. 5, errors are detected in the received data 25-1 and 25-2. However, return processing is not performed because of the reasons described later. On the other hand, no error is detected in the received data 25-3. Therefore, the receiver returns an ACK signal corresponding to the received data 25-3 to the transmitter.

The processing in this embodiment is different from the conventional system in that, when errors are detected in the received data 25-1 and 25-2, NACK is not returned. In the processing in this embodiment, a threshold of the number of times of error detection (an error detection threshold) is set for each transmission data and NACK is not returned until the number of times of error detection exceeds the error detection threshold even if an error is detected.

The transmitter generates, on condition that radio packets are retransmitted, a plurality of radio packets from specific transmission data (equivalent to 19-3 shown in the figure) and arranges the packets not only in the time direction but in the space direction according to a state of the MIMO propagation path, i.e., a state of streams to be generated. Therefore, from the beginning, the receiver receives radio packets on condition that a plurality of radio packets are combined and decoded. This makes it possible to reduce a frequency of occurrence of feedback by a NACK signal while obtaining an interleave effect in the space direction. Consequently, a control delay is eliminated.

In Fig. 5, in response to feedback of ACK corresponding to the transmission data 19-3 output by the data generating unit 1, the transmitter converts the transmission data 19-4 output by the data generating unit 1 into the encoded data 20-1 and then inputs the encoded data 20-1 to the buffer 18-3 and the buffer 18-4. The contents of the buffers 18-1 to 18-4 are sent to the modulating units 3-1 to 3-4 in the same manner as the last time and transmitted. On the other hand, the receiver combines the received data 25-1 and 25-2 with data at the time of the last reception and then decodes the received data 25-1 and 25-2. As a result, because no error is detected, the receiver feeds back ACK to the transmitter 10. The received data 25-4 is combined with received packets simultaneously transmitted on two streams and then decoded. Because no error is detected, the receiver feeds back ACK to the transmitter 10.

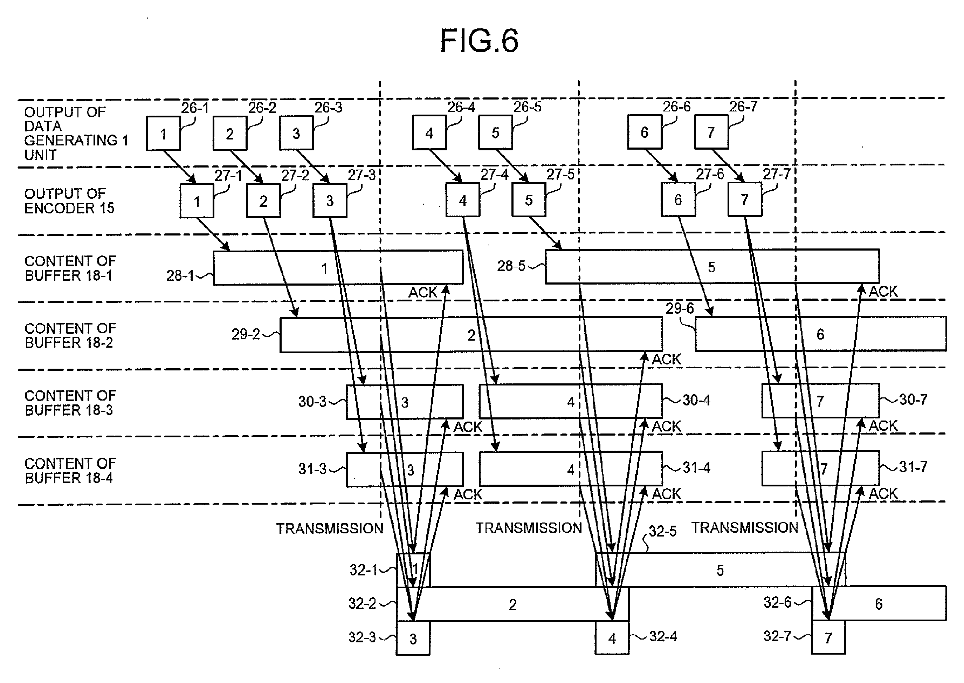

An example of radio packet generation and arrangement that is performed in a different manner from those shown in Fig. 5 is shown in Fig. 6. In Fig. 6, for example, decoding is successful in one received packet. In Fig. 6, 26-1 to 26-7 represent signals (transmission data) output from the data generating unit 1; 27-1 to 27-7 represent signals (transmission data) output from the encoder 15; 28-1 and 28-5 represent contents of the buffer 18-1; 29-2 and 29-6 represent contents of the buffer 18-2; 30-3, 30-4, and 30-7 represent contents of the buffer 18-3; 31-3, 31-4, and 31-7 represent contents of the buffer 18-4; and 32-1 to 32-7 represent received data.

In Fig. 6, unlike Fig. 5, the received data 32-1 is decoded by only one radio packet and ACK is returned as a result of the decoding. In this way, the receiver feeds back ACK when the number of times of error detection is equal to or lower than the error detection threshold. On the other hand, the transmitter generates the content 28-5 of the buffer 18-1 in response to the return of ACK and inputs the content to the buffer 18-1.

Examples of "Chase combining" are shown in Figs. 5 and 6. However, similar effects can be obtained by using "IR method". In that case, all of a plurality of radio packets generated from certain one transmission data can be independently decodable or cannot be independently decodable. For example, a plurality of radio packets having the number of times of error detection equal to or lower than the error detection threshold can be combined to generate radio packets such that the radio packets are decodable

As described above, in this embodiment, in the hybrid ARQ system on the MIMO transmission path, a plurality of radio packets are arranged in the space (stream) direction in addition to the time direction and a plurality of radio packets generated from single transmission data are arranged in the space direction and simultaneously transmitted. NACK is not returned until the number of times of transmission error detection becomes equal to or larger than a predetermined threshold (the error detection threshold). Consequently, both improvement of a transmission characteristic by the interleave effect in the space direction and elimination of a control delay through a reduction in a feedback information amount can be realized.

### Second Embodiment.

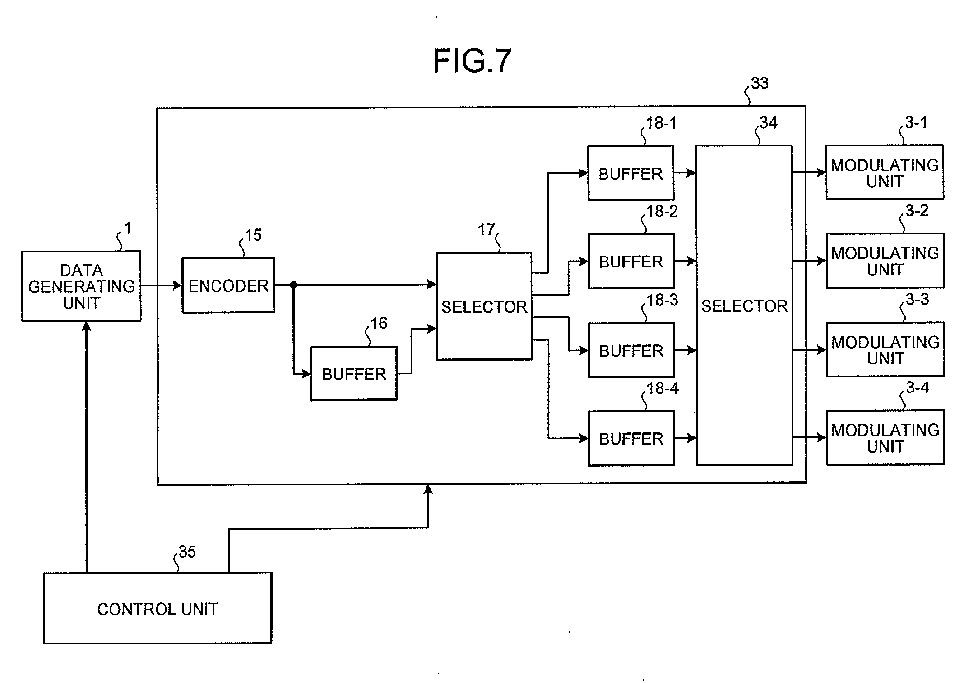

Fig. 7 is a diagram of an example of the structure of a radio transmitting apparatus (hereinafter, "transmitter") according to a second embodiment of the present invention. The transmitter includes the data generating unit 1, a packet generating unit 33, the modulating units 3-1 to 3-4, and a control unit 35. The packet generating unit 33 includes the encoder 15, the buffer 16, the selector 17, the buffers 18-1 to 18-4, and a selector 34.

This embodiment is different from the first embodiment described above in that the transmitter includes the selector 43. The selector 34 changes the correspondence between the buffers 18-1 to 18-4 and the modulating units 3-1 to 3-4 according to an instruction of the control unit 35. For example, concerning transmission data for which NACK is fed back after the transmission data is transmitted on a low-quality stream, the selector 34 changes allocation to a higher-quality stream and retransmits the transmission data. Even when NACK is not returned because the number of errors detected has not reached the error detection threshold, the selector 34 switches the stream to thereby make it possible to obtain a space interleave effect in addition to a time interleave effect.

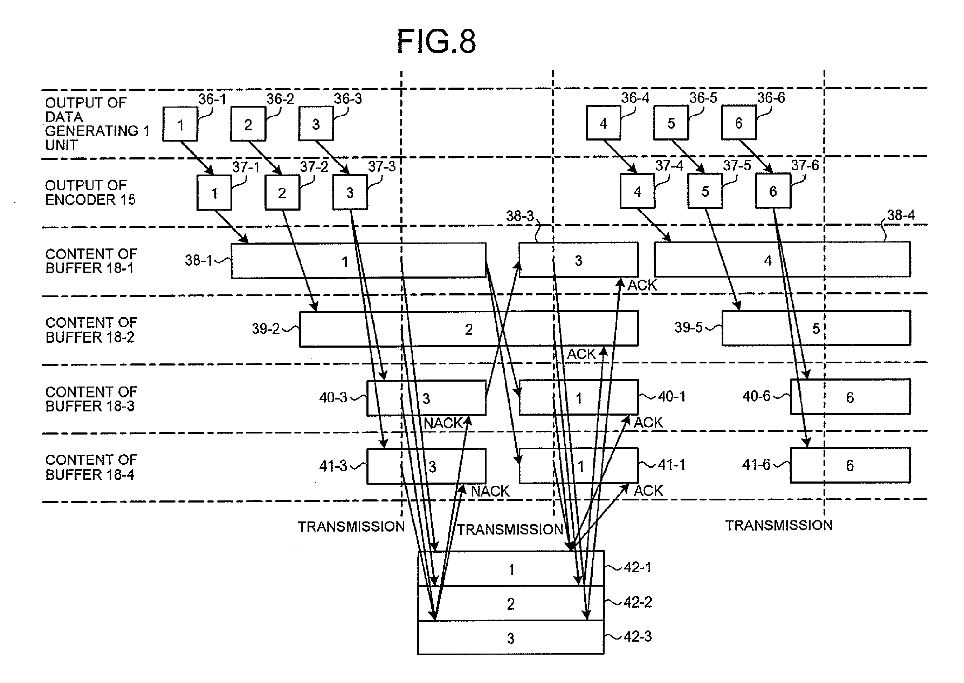

Fig. 8 is a diagram for explaining an example of control in this embodiment. In Fig. 8, 36-1 to 36-6 represent transmission signals (transmission data) of the data generating unit 1; 37-1 to 37-6 represent signals (encoded data) output from the encoder 15; 38-1, 38-3, and 38-4 represent contents of the buffer 18-1; 39-2 and 39-5 represent contents of the buffer 18-2; 40-1, 40-3, and 40-6 represent contents of the buffer 18-3; 41-1, 41-3, and 41-6 represent contents of the buffer 18-4; and 42-1 to 42-3 represent received data.

In Fig. 8, a receiver receives the content 40-3 of the buffer 18-3 and the content 41-3 of the buffer 18-4. An error is detected in a result obtained by combining and decoding the contents. The receiver returns NACK to the transmitter. In returning NACK to the transmitter, in transmission in the second time, the allocation of the encoded data 37-3 output by the encoder 15 is switched to the buffer 18-1 and the encoded data 37-1 originally allocated to the buffer 18-1 and output by the encoder 15 is allocated to the buffer 18-3 and the buffer 18-4. By performing such processing, the space interleave effect is obtained and an error rate characteristic at the time of transmission in the next time is improved.

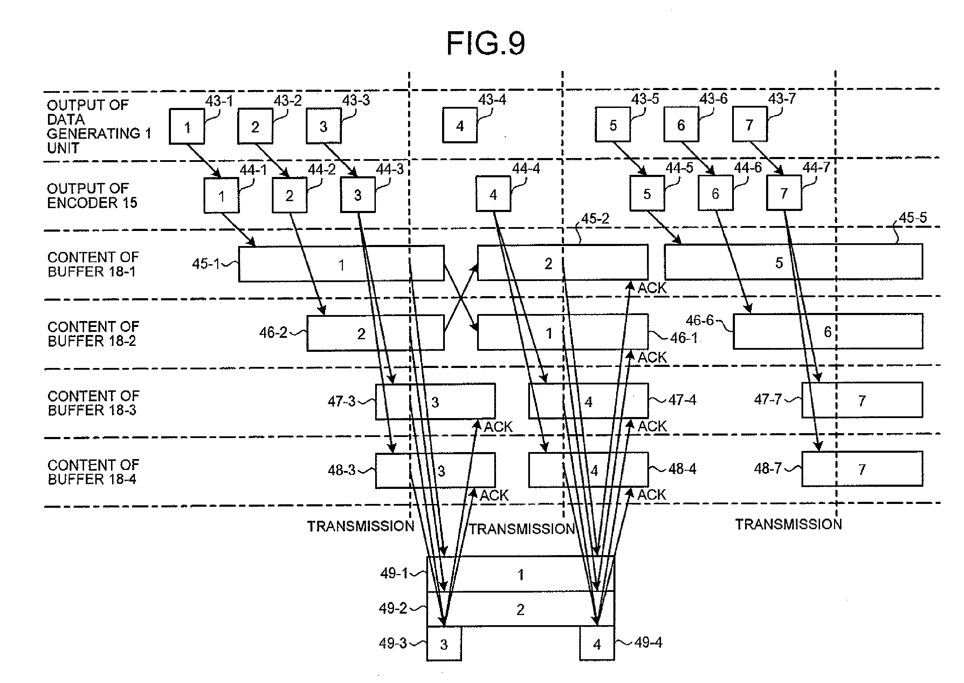

An example of control that is performed in a different manner from that shown in Fig. 8 is shown in Fig. 9. In Fig. 9, 43-1 to 43-7 represent signals (transmission data) output from the data generating unit 1; 44-1 to 44-7 represent signals (encoded data) output from the encoder 15; 45-1, 45-2, and 45-5 represent contents of the buffer 18-1; 46-1, 46-2, and 46-6 represent contents of the buffer 18-2; 47-3, 47-4, and 47-7 represent contents of the buffer 18-3; 48-3, 48-4, and 48-7 represent contents of the buffer 18-4; and 49-1 to 49-4 represent received data.

In Fig. 9, the transmitter switches, at the time of initial transmission and at the time of retransmission, stream allocation for the encoded data 44-1 and 44-2 output by the encoder 15. Because the interleave effect is obtained in the space (stream) direction by performing such processing, an error rate characteristic is improved.

As described above, according to this embodiment, stream allocation is switched at the time of initial transmission and at the time of retransmission. Consequently, in addition to the effect in the first embodiment described above, an effect of further improvement of an error rate characteristic is obtained and it is possible to further improve transmission throughput.

### Third Embodiment.

Operations in a third embodiment are explained next. The structure of a transmitter is the same as that in the first or second embodiment.

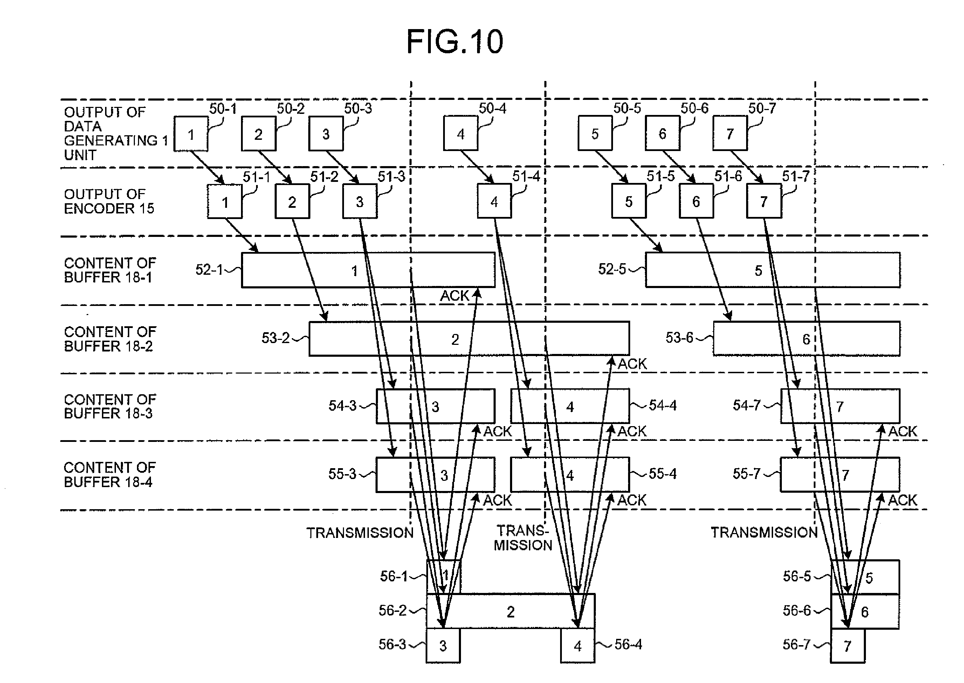

Fig. 10 is a diagram for explaining a method of arranging radio packets according to the third embodiment. In Fig. 10, 50-1 to 50-7 represent signals (transmission data) output from the data generating unit 1; 51-1 to 51-7 represent signals (encoded data) output from the encoder 15; 52-1 and 52-5 represent contents of the buffer 18-1; 53-2 and 53-6 represent contents of the buffer 18-2; 54-3, 54-4, and 54-7 represent contents of the buffer 18-3; 55-3, 55-4, and 55-7 represent contents of the buffer 18-4; and 56-1 to 56-4 represent received data.

This embodiment is different from the first and second embodiments described above in that, when decoding is successful in the number of times of error detection equal to or smaller than an error threshold and ACK is returned from a reception side, transmission on streams corresponding to ACK is stopped. For example, in the buffer 18-1, after ACK is returned only in one radio packet transmission, a new output of the encoder 15 is not allocated and transmission is not performed. By performing such processing, inter-stream interference in MIMO is reduced and a transmission error rate characteristic is improved.

As described above, according to this embodiment, when ACK is returned from the reception side in the number of times of error detection equal to or smaller than the error detection threshold, stream allocation for a new output of the encoder is not performed and transmission is not performed. Consequently, it is possible to further improve a transmission error rate characteristic.

### Fourth Embodiment.

Operations in a fourth embodiment are explained next. The structure of a transmitter is the same as that in the first or second embodiment described above.

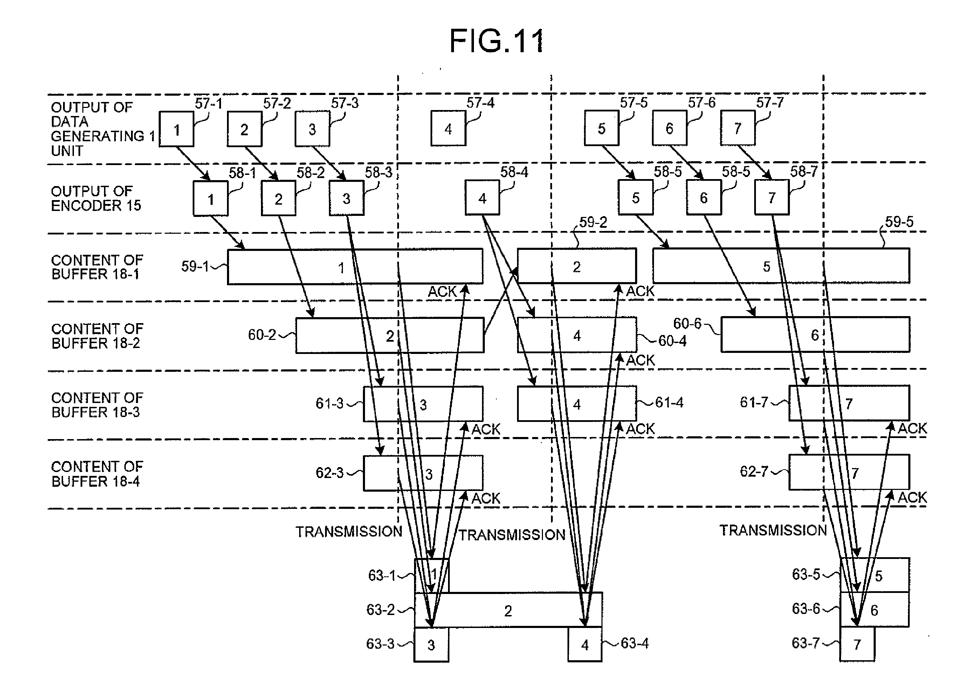

Fig. 11 is a diagram for explaining a method of arranging radio packets according to the fourth embodiment. In Fig. 10, 57-1 to 57-7 represent signals (transmission data) output from the data generating unit 1; 58-1 to 58-7 represent signals (encoded data) output from the encoder 15; 59-1, 59-2, and 59-5 represent contents of the buffer 18-1; 60-2, 60-4, and 60-6 represent contents of the buffer 18-2; 61-3, 61-4, and 61-7 represent contents of the buffer 18-3; 62-3 and 62-7 represent contents of the buffer 18-4; and 63-1 to 63-7 represent received data.

This embodiment is different from the third embodiment in that, when transmission is not performed on a stream, allocation of streams is changed and transmission on a lowest-quality stream is not performed. For example, in the buffer 18-1, after ACK is returned in only one radio packet transmission, the contents of the buffer 18-2 are allocated to the buffer 18-1 and the signal 58-4 output from the encoder 15 is allocated to the buffer 18-2 and the buffer 18-3.

As described above, according to this embodiment, when transmission is not performed on a stream having a high transmission quality, transmission is not performed on a stream having a low transmission quality instead of this stream. Consequently, it is possible to realize further improvement of a transmission error rate.

### Fifth Embodiment.

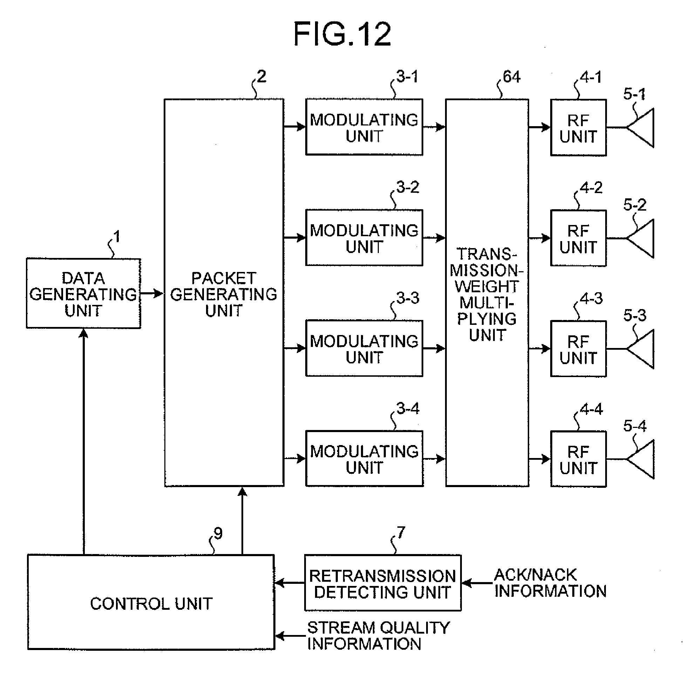

Fig. 12 is a diagram of an example of the structure of a radio transmitting apparatus (hereinafter, "transmitter") according to a fifth embodiment of the present invention. The transmitter includes the data generating unit 1, the packet generating unit 2, the modulating units 3-1 to 3-4, a transmission-weight multiplying unit 64, the RF units 4-1 to 4-4, the transmission antennas 5-1 to 5-4, the retransmission detecting unit 7, and the control unit 9.

The transmitter according to this embodiment is different from the transmitter according to the first embodiment in that the transmission-weight multiplying unit 64 is added between the modulating units 3-1 to 3-4 and the RF units 4-1 to 4-4. In this embodiment, the transmission-weight multiplying unit 64 multiplies streams, on which radio packets are transmitted, with a weight for distributing the streams to respective transmission antennas to thereby form a transmission beam. Consequently, for example, the transmitter is applicable to a MIMO transmission system such as SVD-MIMO for forming a peculiar beam. The SVD-MIMO is a system that can attain a theoretically largest communication capacity. Compared with a method not employing a transmission weight, it is possible to realize further improvement of transmission efficiency.

### Sixth Embodiment.

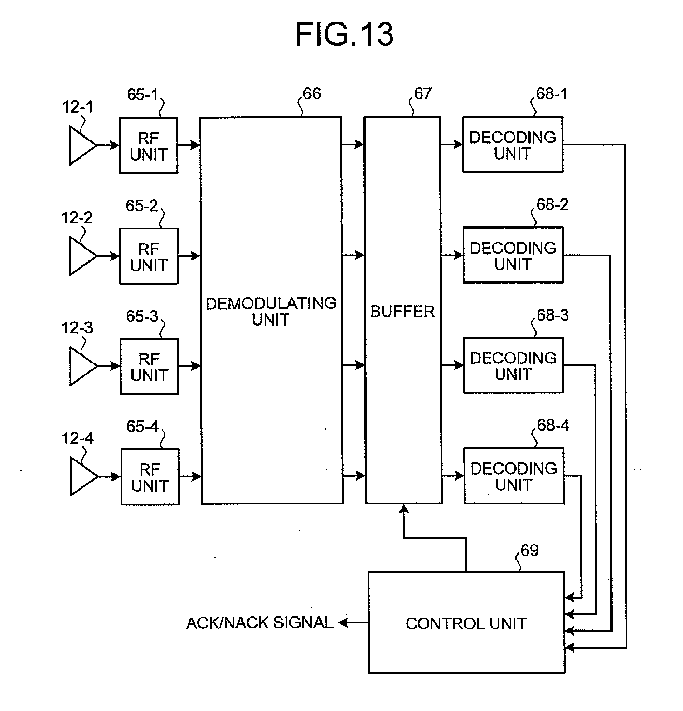

Fig. 13 is a diagram of an example of the structure of a radio receiving apparatus (hereinafter, "receiver") according to the present invention. The receiver includes reception antennas 12-1 to 12-4, RF units 65-1 to 65-4, a demodulating unit 66, a buffer 67, decoding units 68-1 to 68-4, and a control unit 69.

Operations of the receiver are explained next. A signal transmitted from a transmitter is received by the antennas 12-1 to 12-4 and input to the demodulating unit 66 via the RF units 65-1 to 65-4. The demodulating unit 66 performs separation and detection of MIMO-multiplexed respective streams and demodulation of the separated respective streams. The demodulation result is input to the buffer 67. The buffer 67 performs processing for combining packets in the hybrid ARQ under the control of the control unit 69. A result obtained as a result of the combining is decoded and subjected to error-detection by the decoding units 68-1 to 68-4. A result of the error detection for respective received data is sent to the control unit 69. The control unit 69 outputs an ACK/NACK signal according to the received error detection result. This ACK/NACK signal is fed back to the transmitter.

The control unit 69 sets priorities for received packets and controls the decoding unit 66 to decode the received packets in order of the priorities. In this embodiment, as an example, the control unit 69 controls the decoding units 68-1 to 68-4 to decode transmission data in order from one transmitted on a higher-quality stream. When transmission data are transmitted at the same time on a plurality of streams, the control unit 69 controls the decoding units 68-1 to 68-4 using a total of qualities. The decoding units 68-1 to 68-4 collectively decode data not in time for decoding processing after waiting for arrival of the next radio packets for combination. It is highly likely that a packet deferred for later processing cannot be decoded and an additional radio packet is necessary. However, in the MIMO radio communication system according to the present invention, as described in the first embodiment, NACK is not fed back from the receiver unless the number of times of error detection exceeds the error detection threshold. Therefore, even if processing is deferred, problems such as an increase in feedback information due to occurrence of NACK and an increase in a control delay involved in the increase in feedback information do not occur. In this embodiment, the transmission data are processed in order from one having a highest quality. However, priority can also be comprehensively determined by taking into account the number of times of decoding error detection and the like.

As described above, with the receiver according to this embodiment, it is possible to reduce a processing ability and realize a reduction in size and a reduction in power consumption.

### INDUSTRIAL APPLICABILITY

As described above, the radio transmitting apparatus and the radio receiving apparatus according to the present invention are useful for the MIMO radio communication system and, in particular, suitable for the MIMO radio communication system employing the hybrid ARQ.

## Claims

1. A radio transmitting apparatus that transmits radio packets using a plurality of streams in a radio communication system employing a hybrid ARQ (Automatic Repeat Request), the radio transmitting apparatus comprising:
a packet generating unit that generates a plurality of transmission packets from single transmission data and arranges the transmission packets in a space direction such that the transmission packets can be simultaneously transmitted; and
a transmitting unit that separately carries out predetermined transmission processing on each of the transmission packets arranged in the space direction and simultaneously transmits the transmission packets using streams corresponding to the transmission packets.

2. The radio transmitting apparatus according to claim 1, wherein
the packet generating unit separately allocates the packets generated from the single transmission data to streams that do not satisfy a predetermined stream quality standard among the streams and, on the other hand, allocates a single transmission packet generated from the single transmission data to streams that satisfy the stream quality standard, and
the transmitting unit simultaneously transmits all the transmission packets allocated to the respective streams by the packet generating unit.

3. The radio transmitting apparatus according to claim 2, wherein a signal-to-noise power ratio or a signal-to-interference power ratio for each of the streams is used as the predetermined stream quality standard.

4. The radio transmitting apparatus according to claim 2, wherein a singular value obtained by singular-value-decomposing a MIMO propagation path matrix is used as the predetermined stream quality standard.

5. The radio transmitting apparatus according to claim 2, wherein an allocation request transmitted from a receiver is used as the predetermined stream quality standard.

6. The radio transmitting apparatus according to claim 2, wherein the packet generating unit generates a plurality of radio packets, which are generated from transmission data, in a form in which the radio packets can be combined by a "Chase Combining method" of the hybrid ARQ on a reception side.

7. The radio transmitting apparatus according to claim 2, wherein the packet generating unit generates a plurality of radio packets, which are generated from transmission data, in a form in which the radio packets can be combined by an "IR (Incremental Redundancy) method" of the hybrid ARQ on a reception side.

8. The radio transmitting apparatus according to claim 2, wherein the packet generating unit encodes at least one of a plurality of radio packets generated from the single transmission data such that the radio packet can be independently decoded.

9. The radio transmitting apparatus according to claim 2, further comprising a switching unit that switches, at predetermined transmission time, a stream used for transmission of the transmission packets generated by the packet generating unit.

10. The radio transmitting apparatus according to claim 9, wherein the switching unit switches the stream at the time of initial transmission and at the time of retransmission based on a response from a receiver.

11. The radio transmitting apparatus according to claim 2, wherein, when the radio transmitting apparatus communicates with a receiver that sets an error detection threshold indicative of a number of times of error detection for each of transmission data, returns a NACK signal when a number of times of error detection exceeds the error detection threshold, and returns an ACK signal when a detected number of times of error detection is equal to or smaller than the error detection threshold and decoding is successful, the transmitting unit stops transmission performed by using a stream corresponding to the ACK signal.

12. The radio transmitting apparatus according to claim 11, wherein, after the transmission is stopped by the transmitting unit, stream allocation for the transmission packets is changed to not transmit the transmission packets on a lowest-quality stream.

13. The radio transmitting apparatus according to claim 2, further comprising a transmission-antenna-weight multiplying unit that multiplies the streams with a weight for distributing the streams to respective transmission antennas.

14. A radio receiving apparatus that receives radio packets transmitted by using a plurality of streams in a radio communication system employing a hybrid ARQ (Automatic Repeat Request), the radio receiving apparatus comprising:
a decoding unit that decodes original transmission data from a received packet; and
a retransmission control unit that generates an ACK signal and a NACK signal based on a result of the decoding and returns the ACK signal and the NACK signal to a transmitter, wherein
the retransmission control unit sets an error detection threshold indicative of a number of times of error detection for each of the transmission data and returns the NACK signal when number of errors detected by the decoding unit exceeds the error detection threshold.

15. The radio receiving apparatus according to claim 14, wherein the decoding unit sets priorities for received respective packets and performs decoding processing in order of the priorities.

16. A radio communication system that employs a hybrid ARQ (Automatic Repeat Request) and transmits and receives radio packets using a plurality of streams, the radio communication system comprising:
a transmitter including
a packet generating unit that generates a plurality of transmission packets from single transmission data and arranges the transmission packets in a space direction such that the transmission packets can be simultaneously transmitted; and
a transmitting unit that separately carries out predetermined transmission processing on each of the transmission packets arranged in the space direction and simultaneously transmits the transmission packets using streams corresponding to the transmission packets; and
a receiver including
a decoding unit that decodes original transmission data from a received packet; and
a retransmission control unit that sets, in processing for generating an ACK signal and a NACK signal based on a result of the decoding and returning the ACK signal and the NACK signal to a transmitter, an error detection threshold indicative of a number of times of error detection for each of the transmission data and returns the NACK signal when number of errors detected by the decoding unit exceeds the error detection threshold.

17. The radio communication system according to claim 16, wherein a plurality of streams are formed on a MIMO propagation path.

18. The radio communication system according to claim 17, wherein a peculiar beam obtained by eigenvalue-decomposing or singular-value-decomposing a MIMO propagation path matrix is used as the streams formed on the MIMO propagation path.
